# EUROPÄISCHE PATENTSCHRIFT

(11) **EP 0 924 848 B1**
(45) Veröffentlichungstag und Bekanntmachung des Hinweises auf die Patenterteilung: **09.02.2005**
(21) Anmeldenummer: 98120043.9
(22) Anmeldetag: 23.10.1998
(51) Int. Cl.: H02P 3/06

(54) **Reihenschlussmotor mit Kommutator**
Series motor with commutator
Moteur serie avec commutateur

(30) Priorität: 20.12.1997 DE 19757168
(43) Veröffentlichungstag der Anmeldung: 23.06.1999
(73) Patentinhaber: C. & E. Fein GmbH, 73529 Schwäbisch-Gmünd-Bargau (DE)
(72) Erfinder: Meyer, Christoph, 70599 Stuttgart (DE); Kress, Christof, 73779 Deizisau (DE); Wurst, Bert G., 70329 Stuttgart (DE)
(74) Vertreter: Gahlert, Stefan, Dr.-Ing.

(56) Entgegenhaltungen:
- DE-A- 3 636 555
- DE-A- 4 025 713
- US-A- 3 628 112

## Beschreibung

Die Erfindung betrifft einen Reihenschlußmotor mit Kommutator, insbesondere Universalmotor für ein gebremstes Elektrowerkzeug, mit einer Schalteinrichtung zur Umschaltung zwischen Motorbetrieb und Bremsbetrieb, wobei im Motorbetrieb mindestens eine Feldwicklung mit einer Ankerwicklung in einem von einer Versorgungsspannung beaufschlagten Motorstromkreis in Reihe geschaltet ist, und wobei im Bremsbetrieb die mindestens eine Feldwicklung mit der Ankerwicklung und mindestens einer Wendepolwicklung einen geschlossenen und von der Versorgungsspannung abgetrennten Bremsstromkreis bildet.

Ein derartiger Reihenschlußmotor ist aus der DE 40 25 713 C2 bekannt.

Der bekannte Motor ist insbesondere zum Antrieb von gebremsten Elektrowerkzeugen, wie etwa gebremsten Winkelschleifern geeignet und verwendet hierzu einen zwischen Motor- und Bremsbetrieb umschaltenden mehrpoligen Umschalter mittels dessen der Motor im Bremsbetrieb kurzgeschlossen und die Feldwicklung umgepolt wird, sowie Mittel zur Begrenzung des Bremsstroms durch die Feldwicklung, mit denen eine sanfte und schnelle Kurzschlußbremsung durch eine eigenständige Selbsterregung durchgeführt werden kann. Der Anker ist im Motorbetrieb zwischen die Feldwicklungen und die Wendepolwicklung geschaltet, wobei im Bremsbetrieb zur Begrenzung des Bremsstroms die Feldwicklung ein Strompfad zwischen dem Anker und den Wendepolwicklungen geschaltet ist, der eine Zenerdiodenanordnung zur Begrenzung des Bremsstroms enthält, so daß nur ein bestimmter Anteil des Bremsstroms über die Feldwicklungen fließt.

Mit einem derartigen Motor läßt sich zwar eine relativ zuverlässige Bremsung des Motors bei Umschaltung in den Bremsbetrieb erreichen, jedoch führt die Verwendung von derartigen Wendepolwicklungen zu einer Reduzierung der Leistung, was insbesondere bei einer Verwendung in Elektrowerkzeugen, in denen es auf eine besonders hohe Leistung bei geringem Gewicht und geringen Abmessungen ankommt, als nachteilig anzusehen ist.

Bei einem ähnlichen Reihenschlußmotor, der aus der DE 36 36 555 A1 bekannt ist, ist gleichfalls ein Umschalter zur Umschaltung zwischen Motorbetrieb und Bremsbetrieb vorgesehen. Im Motorbetrieb sind der Anker und die Feldwicklung in einer ersten Polung zueinander von einer äußeren Stromversorgung mit Spannung beaufschlagt. Im Bremsbetrieb liegt die Feldwicklung zu dem Anker parallel. Um im Bremsbetrieb die zuverlässige Einleitung einer Selbsterregung zu gewährleisten, sind Speichermittel vorgesehen, die im Motorbetrieb nachgeladen werden und im Bremsbetrieb die Selbsterregung einleiten. Außerdem ist eine zur Feldwicklung parallel geschaltete Zenerdiode vorgesehen, um im Bremsbetrieb die Felderregung soweit zu begrenzen, daß weder übermäßiges Kollektorfeuer noch unerwünscht hohe Bremsmomente auftreten.

Als nachteilig bei dieser Anordnung ist die Elektronik anzusehen, die naturgemäß einem Ausfallrisiko unterliegt und somit zu einer Herabsetzung der Funktionssicherheit der Bremse führt.

Darüber hinaus ist ein weiterer Reihenschlußmotor ähnlicher Bauart aus der US 3 628 112 bekannt geworden. Bei dem vorbekannten Motor liegt der Anker mit zwei in Reihe geschalteten Feldwicklungen im Motorbetrieb an einer. Versorgungsspannung, während im Bremsbetrieb die Feldwicklungen umgepolt werden und ein geschlossener, von der Versorgungsspannung abgetrennter Bremsstromkreis mit den Feldwicklungen und der Ankerwicklung und einem Bremswiderstand gebildet wird. Wiederum ist eine Speicherschaltung, die im Motorbetrieb nachgeladen wird, zur Einleitung der Selbsterregung vorgesehen. Zusätzlich ist im Bremsstromkreis ein Regelorgan vorgesehen, um nach Ablauf einer vorbestimmten Bremszeit den Bremswiderstand zu überbrücken.

Auch hierbei ist die relativ aufwendige Elektronik, die zur Funktion der Bremsung unbedingt notwendig ist, als nachteilig anzusehen.

Der Erfindung liegt demnach die Aufgabe zugrunde, einen Reihenschlußmotor anzugeben, bei dem bei gleichbleibendem Gewicht bzw. bei gleichbleibenden Abmessungen eine erhöhte Leistung erreicht werden kann, wobei eine hohe Betriebssicherheit erreicht werden soll.

Diese Aufgabe wird erfindungsgemäß mit einem Reihenschlußmotor mit den Merkmalen des Anspruchs 1 gelöst.

Die Aufgabe der Erfindung wird auf diese Weise vollkommen gelöst.

Dadurch, daß die Wendepolwicklung im Motorbetrieb nicht vom vollen Stromfluß durch die Ankerwicklung und die zumindest eine Feldwicklung erfaßt ist, kann die zumindest eine Wendepolwicklung schwächer dimensioniert werden und mit einem geringeren Leitungsquerschnitt ausgeführt werden. Zusätzlich wird dadurch, daß die zumindest eine Wendepolwicklung im Motorbetrieb außer Funktion ist, ein geringerer Leistungsverlust im Motorbetrieb erreicht.

Insgesamt läßt sich auf diese Weise die Leistungsausbeute gegenüber dem vorbekannten Reihenschlußmotor bei sonst gleicher Funktionsweise deutlich steigern.

In vorteilhafter Weiterbildung der Erfindung ist eine Einrichtung zur Überbrückung der zumindest einen Wendepolwicklung im Bremsbetrieb nach Ablauf einer bestimmten Zeit oder in Abhängigkeit von einer für den Verlauf des Bremsvorgangs charakteristischen Größe wie der Drehzahl, dem Bremsstrom oder der Bremsspannung, vorgesehen.

Diese Maßnahme hat den Vorteil, daß die Wendepolwicklung, die nur in der Anfangsphase der Bremsung notwendig ist, um das Ankerquerfeld aufzuheben, im Verlauf des Bremsvorgangs überbrückt werden kann, um so die Abklingzeit bis zum Stillstand der Maschine zu verringern.

Auf die Weise läßt sich eine verstärkte Bremswirkung gegen Ende des Bremsvorgangs erreichen.

Hierbei läßt sich der Verlauf des Bremsvorgangs optimal an die gewünschten Verhältnisse anpassen. Während eine Überbrückung der Wendepolwicklung nach Ablauf einer vorbestimmten Bremszeit die einfachste Lösung darstellt, kann durch Steuerung der Überbrückung in Abhängigkeit von einer für den Verlauf des Bremsvorgangs charakteristischen Größe eine verbesserte Steuerung der Abklingkurve in Abhängigkeit von verschiedenen externen Einflußparametern, wie etwa der anfänglichen Drehzahl bei Beginn des Bremsvorgangs, der Trägheit des Systems und dergleichen erreicht werden.

In zusätzlicher Weiterbildung der Erfindung ist eine Speichereinrichtung vorgesehen, die im Motorbetrieb aufgeladen wird und im Bremsbetrieb zur Einleitung der Selbsterregung einen Strom durch die mindestens eine Feldwicklung erzeugt.

Hierbei kann die Speichereinrichtung einen Kondensator aufweisen, der im Motorbetrieb durch den Spannungsabfall an der zumindest einen Feldwicklung oder an der Ankerwicklung oder durch die Versorgungsspannung aufgeladen wird.

Obwohl die Selbsterregung bei Verwendung einer Wendepolwicklung im Bremsstromkreis an sich zu einer ausreichend zuverlässigen Einleitung des Bremsvorgangs führt, kann durch diese Maßnahme zusätzlich die Funktionssicherheit der Bremse auch bei den unterschiedlichsten Einsatzbedingungen noch weiter gesteigert werden.

Vorzugsweise ist hierbei parallel zu dem Kondensator eine Diode geschaltet, über die die zumindest eine Feldwicklung im Bremsbetrieb mit der zumindest einen Wendepolwicklung oder mit der Ankerwicklung verbunden ist.

Auf diese Weise wird der Stromfluß über die zumindest eine Feldwicklung zur Einleitung der Selbsterregung durch Entladung des Kondensators sichergestellt.

In weiter bevorzugter Ausgestaltung der Erfindung ist zur Begrenzung des Bremsstroms im Bremsbetrieb in einem zu der zumindest einen Feldwicklung parallelen Strompfad eine Spannungsbegrenzungseinrichtung geschaltet.

Durch diese Maßnahme wird eine anfänglich zu starke Bremsung vermieden.

Die Spannungsbegrenzungseinrichtung ist in bevorzugter Weiterbildung der Erfindung von mehreren, in Reihe geschalteten Dioden gebildet, die in Durchlaßrichtung geschaltet sind.

Diese Maßnahme hat den Vorteil, daß durch die Verwendung mehrerer, in Reihe geschalteter Dioden in der Regel eine größere Betriebssicherheit und eine größere Verlustleistung als mit einer einzigen Zenerdiode erreicht werden kann.

Gemäß einer weiteren Ausführung der Erfindung ist die Spannungsbegrenzungseinrichtung von zwei antiparallel miteinander verbundenen Diodenstrecken gebildet.

Diese Ausführung wird bevorzugt, wenn keine Speichereinrichtung zur Einleitung der Selbsterregung vorgesehen ist.

In weiter bevorzugter Ausführung der Erfindung ist die Ankerwicklung über die Schalteinrichtung im Motorbetrieb an einem Ende mit einem Pol der Speisespannungsquelle verbunden und am anderen Ende über die Schalteinrichtung mit zwei in Reihe geschalteten Feldwicklungen verbunden, die über eine Steuerelektronik mit dem zweiten Pol der Speisespannungsquelle verbunden sind.

Diese Maßnahme hat den Vorteil, daß sich der Motor bei Verwendung einer Steuerelektronik relativ einfach entstören läßt. Hierbei handelt es sich um ein überraschendes Ergebnis, da herkömmlicherweise bei Verwendung einer Steuerelektronik eine symmetrische Anordnung der Feldwicklungen in Bezug auf die Ankerwicklung, d.h. eine Feldwicklung vor der Ankerwicklung und eine weitere Feldwicklung nach der Ankerwicklung, als besser entstörfähig angesehen wurde.

Die Steuerelektronik wird in an sich bekannter Weise vorteilhaft zumindest zur Anlaufstrombegrenzung oder zur Begrenzung der Leerlaufdrehzahl verwendet oder aber um einen Anlauf dieses Motors bei Einstecken eines Verbindungssteckers zu verhindern, wenn sich der Schalter in der Einschaltstellung befindet.

Auf diese Weise wird die Funktionssicherheit und Betriebssicherheit des erfindungsgemäßen Motors verbessert.

Gemäß einer weiteren Ausführung der Erfindung ist ein Schalter zur Abschaltung der Bremsfunktion vorgesehen.

Auf diese Weise kann der Reihenschlußmotor wahlweise gebremst oder ungebremst verwendet werden.

Es versteht sich, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen
- Fig. 1: ein vereinfachtes Schaltbild des erfindungsgemäßen Motors im Motorbetrieb;
- Fig. 2: die Schaltung gemäß Fig. 1 im Bremsbetrieb;
- Fig. 3: eine Abwandlung der Schaltung gemäß Fig. 2 im Bremsbetrieb und
- Fig. 4: eine weitere Abwandlung der Schaltung gemäß Fig. 3 im Bremsbetrieb.

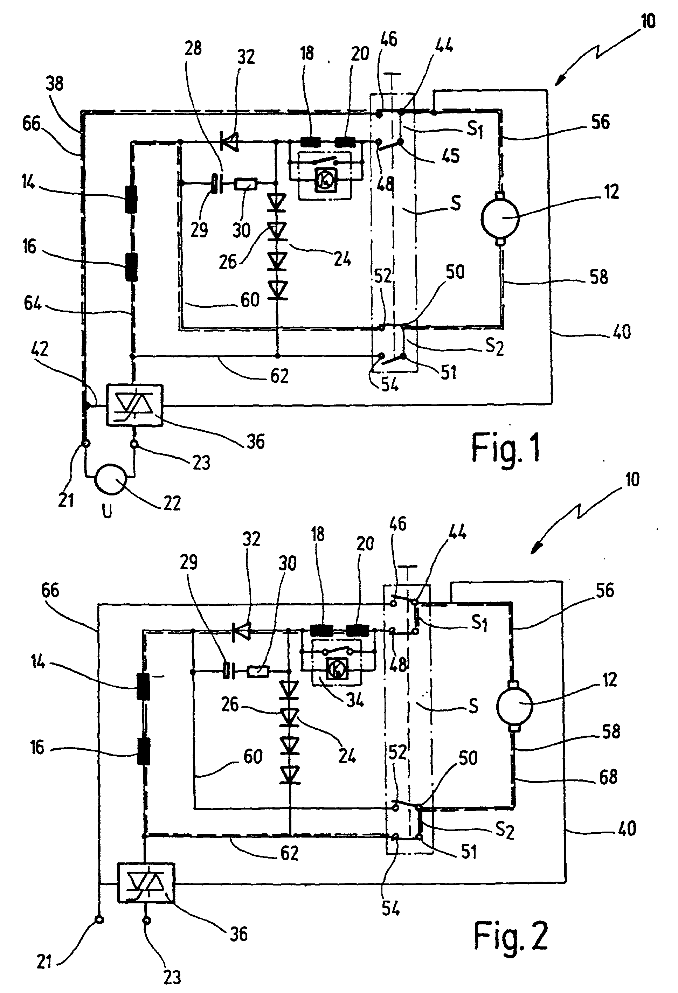

Ein erfindungsgemäßer Reihenschlußmotor ist in den Fig. 1 und 2 insgesamt mit der Ziffer 10 bezeichnet.

Der Motor 10 umfaßt einen Anker 12 mit einer nicht dargestellten Ankerwicklung, die über einen nicht dargestellten Kommutator und lediglich schematisch angedeutete Bürsten über einen Schalter S im Motorbetrieb gemäß Fig. 1 in Reihe mit einer Speisespannungsquelle 22 schaltbar ist.

Bei dem Schalter S handelt es sich um einen zweipoligen Umschalter mit einem ersten Umschalter S₁ und einem zweiten Umschalter S₂. Der erste Pol 21 der Speisespannungsquelle 22 ist über eine Leitung 38 mit einem ersten Umschaltkontakt 46 des ersten Umschalters S₁ verbunden, der in dem in Fig. 1 dargestellten Motorbetrieb mit zwei miteinander verbundenen Schaltkontakten 44 und 45 des Umschalters S₁ verbunden ist, die wiederum über eine Leitung 56 mit einem Pol des Ankers 12 gekoppelt sind. Der zweite Pol des Ankers 12 ist über eine Leitung 58 mit zwei miteinander verbundenen Kontakten 50 und 51 des zweiten Umschalters S₂ verbunden, die wiederum in der gezeichneten Schaltstellung mit einem Kontakt 52 verbunden sind, der über eine Leitung 60 mit einem ersten Ende einer ersten Feldwicklung 14 gekoppelt ist, die mit einer zweiten Feldwicklung 16 in Reihe geschaltet ist und über eine Steuerelektronik 36 mit dem zweiten Pol 23 der Speisespannungsquelle 22 verbunden ist. Die Steuerelektronik 36 ist zusätzlich über eine Steuerleitung 42 mit dem anderen Pol 21 der Speisespannungsquelle 22 und über eine Steuerleitung 40 mit den Kontakten 44 und 45 des ersten Umschalters S₁ gekoppelt.

Die Steuerelektronik 36 dient zur Begrenzung des Anlaufstroms beim Einschalten des Motors, zur Begrenzung der Leerlaufdrehzahl des Motors und verhindert es, daß der Motor anläuft, wenn ein Stecker zur Verbindung mit der Speisespannungsquelle 22 eingesteckt wird, während sich der Schalter S in der in Fig. 1 gezeichneten Einschaltstellung befindet. Diese an sich bekannte Steuerelektronik 36 ist mit der Feldwicklung 16 verbunden, während die zweite Feldwicklung 14 über den Schalter S mit der Ankerwicklung 12 und diese wiederum mit dem anderen Pol der Speisespannung 22 gekoppelt ist. Durch diese Anordnung wird die Entstörung des Reihenschlußmotors 10 erleichtert.

Der so im Motorbetrieb geschlossene Motorstromkreis 66, in dem der Anker 12, die beiden Feldwicklungen 14, 16 und die Steuerelektronik 36 enthalten sind, ist in Fig. 1 durch eine gestrichelte Linie verdeutlicht.

Der zweite Umschaltkontakt 48 des ersten Umschalters S₁ steht über zwei in Reihe geschaltete Wendepolwicklungen 18, 20 und eine Diode 32 mit dem Anschluß der ersten Feldwicklung 14 in Verbindung, der über die Leitung 60 gleichfalls über die Kontakte 52, 50 des Schalters S₂ mit dem Anker 12 verbunden ist. Parallel zu der Diode 32 ist ein Kondensator 29 in Reihe mit einem Begrenzungswiderstand 30 an das mit der Diode 32 verbundene Ende der Wendepolwicklung 18 angeschlossen, wobei der Begrenzungwiderstand 30 ferner über eine Spannungsbegrenzungseinrichtung 24, die im dargestellten Beispiel aus vier in Durchlaßrichtung in Reihe geschalteten Dioden 26 besteht, mit einer Leitung 62 verbunden ist, die einerseits mit der Feldwicklung 16 gekoppelt ist und andererseits mit dem zweiten Umschaltkontakt 54 des zweiten Umschalters S₂ verbunden ist.

Auf diese Weise wird im Motorbetrieb gemäß Fig. 1 der Kondensator 29 über die vier Dioden 26 aus dem Spannungsabfall an den Feldwicklungen 14, 16 aufgeladen.

Wird nun die Schalteinrichtung S aus der in Fig. 1 gezeichneten Stellung (Motorbetrieb) in die in Fig. 2 gezeichnete Stellung (Bremsbetrieb) umgeschaltet, also der Kontakt 45 des ersten Umschalters S₁ mit dem Kontakt 48 verbunden, während die Verbindung des Kontaktes 44 mit dem Kontakt 46 geöffnet wird, und der Kontakt 51 des zweiten Umschalters S₂ mit dem Kontakt 54 verbunden, während die Verbindung des Kontaktes 50 mit dem Kontakt 52 geöffnet wird, so ergibt sich die in Fig. 2 gezeichnete Schaltung, in der der nunmehr geschlossene Bremsstromkreis 68 wiederum gestrichelt verdeutlicht ist. Hierbei ist der erste Pol 21 der Speisespannungsquelle 22 durch Öffnen der Verbindung zwischen den Kontakten 44, 46 des ersten Umschalters S₁ vom Bremsstromkreis 68 abgetrennt. Der Anker 12 steht über die Leitung 58 und die Kontakte 51, 54 des zweiten Umschalters S₂, die Leitung 62 mit den Feldwicklungen 16, 14 in Verbindung, die am anderen Ende über die Diode 32 und die Wendepolwicklungen 18, 20 über die Kontakte 48, 45 des ersten Umschalters S₁ mit dem anderen Anschluß des Ankers 12 gekoppelt sind.

Beim Umschalten vom Motorbetrieb gemäß Fig. 1 in den Bremsbetrieb gemäß Fig. 2 wird anfänglich durch den Kondensator 29 ein kurzer Stromimpuls über den Begrenzungswiderstand 30 und über Anker- und Wendepolwicklung 18 und 20 durch die beiden Feldwicklungen 14, 16 erzeugt, durch den die Selbsterregung zuverlässig eingeleitet wird. Der Motor, der infolge des noch laufenden Ankers 12 nunmehr im Generatorbetrieb arbeitet, erzeugt nunmehr einen Stromfluß im Bremsstromkreis über die beiden Wendepolwicklungen 18, 20 und die nunmehr leitend gewordene Diode 32 über die Feldwicklungen 14, 16, der zu einer elektrodynamischen Bremsung des Motors führt. Dabei wird die nach Einleitung der Selbsterregung auftretende, an den Feldwicklungen 14, 16 abfallende Spannung durch die Spannungsbegrenzungseinrichtung 24 auf die Schwellenspannung, die der Summe der Schwellspannungen der vier Dioden 26 entspricht, begrenzt, so daß der durch die Feldwicklungen 14, 16 fließende Feldstrom begrenzt wird. Somit wird die Bremswirkung zu Beginn der Bremsung begrenzt, um eine zu abrupte Bremsung zu vermeiden. Sobald die über die Diode 32 und den Feldwicklungen 14, 16 abfallende Spannung die Schwellspannung der Spannungsbegrenzungseinrichtung 24 unterschreitet, wird die Spannungsbegrenzungseinrichtung 24 hochohmig und der Bremsstrom fließt nur noch über die Diode 32 und die Feldwicklungen 14, 16.

Es versteht sich, daß durch eine Vergrößerung bzw. Verkleinerung der Anzahl der Dioden 26 das anfängliche Bremsmoment je nach den gewünschten Verhältnissen auf einen bestimmten Wert eingestellt werden kann.

Um gegen Ende des Bremsvorgangs die Bremswirkung wieder zu verstärken, ist eine Einrichtung 34 zur Überbrückung der beiden Wendepolwicklungen 18, 20 vorgesehen. Bei dieser Einrichtung 34 kann es sich um einen zeitabhängigen Schalter, zum Beispiel um ein zeitverzögernd ansprechendes Relais oder Elektronikbauteil, zum Beispiel Triac, mit einer Zeitverzögerungsschaltung handeln. Darüber hinaus ist es möglich, die Einrichtung 34 zur Überbrückung der Wendepolwicklungen 18, 20 in Abhängigkeit von einer für den Verlauf des Bremsvorgangs charakteristischen Größe, wie etwa der Drehzahl, dem Bremsstrom oder der Bremsspannung zu steuern, so daß etwa die Wendepolwicklungen 18, 20 überbrückt werden, sobald die Drehzahl des Motors 10 auf einen vorbestimmten Wert abgefallen ist. Sobald die Wendepolwicklungen 18, 20, die im Vergleich zu den Feldwicklungen 14, 16 und der Ankerwicklung relativ hochohmig sind, überbrückt werden, wird der Bremsvorgang nochmals kurzfristig verstärkt, so daß die Drehzahl gegen Ende des Bremsvorgangs schneller abfällt.

Insgesamt läßt sich so in Kombination mit der Spannungsbegrenzungseinrichtung 24 und der Einrichtung 34 zur Überbrückung der Wendepolwicklungen 18, 20 die Bremscharakteristik in einer gewünschten Weise einstellen. Dabei wird durch die Verwendung der Wendepolwicklungen 18, 20, die lediglich im Bremsbetrieb in Funktion sind, eine besonders zuverlässige Bremsung gewährleistet und ein Leistungsabfall während des Motorbetriebes vermieden.

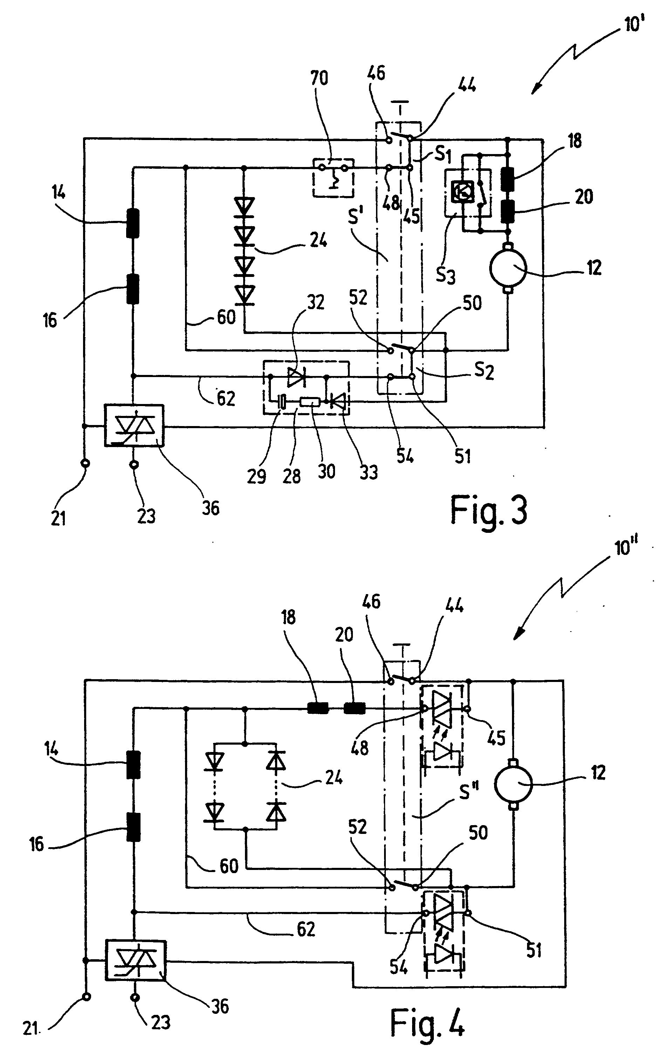

Eine Abwandlung der Schaltung des Reihenschlußmotors gemäß den Fig. 1 und 2 ist in Fig. 3 dargestellt und insgesamt mit der Ziffer 10' bezeichnet.

Hierbei, wie auch bei der nachfolgenden Fig. 4 werden im übrigen gleiche Bezugsziffern für entsprechende Teile verwendet.

Fig. 3 zeigt die Schaltung lediglich im Bremsbetrieb, während auf eine gesonderte Darstellung der Schaltung im Motorbetrieb verzichtet wurde.

Der Unterschied zu der zuvor anhand von Fig. 2 beschriebenen Ausführung besteht darin, daß die Speichereinrichtung 28 nunmehr in der Leitung 62 zwischen der einen Feldwicklung 16 und dem Kontakt 54 des Umschalters angeordnet ist und daß die Wendepolwicklungen 18, 20 nicht mehr mittels des Schalters, der insgesamt mit S' bezeichnet ist, im Motorbetrieb aus dem Motorstromkreis abgetrennt werden, sondern daß statt dessen die Wendepolwicklungen 18, 20 ständig im Motorstromkreis bzw. im Bremsstromkreis liegen und lediglich über einen weiteren Schalter S₃, der Teil des Schalters S' sein kann, im Motorbetrieb überbrückt werden.

Vorzugsweise ist dieser Schalter S₃ ähnlich der Einrichtung 34 als elektronischer Schalter ausgebildet und bewirkt im Motorbetrieb eine Überbrückung der Wendepolwicklungen 18, 20, öffnet dann beim Umschalten vom Motor- in den Bremsbetrieb, um anschließend nach Ablauf einer vorbestimmten Zeit oder in Abhängigkeit von einer charakteristischen Bremsgröße, wie etwa dem Bremsstrom wieder zu schließen, um gegen Ende der Bremsung den Bremsvorgang nochmals kurzfristig zu verstärken.

Wegen der etwas anderen Anordnung der Speichereinrichtung 28 ist diese mit einer zusätzlichen Diode 33 versehen, um eine Aufladung des Kondensators 29 im Motorbetrieb zu ermöglichen.

Des weiteren ist ein Ein-Aus-Schalter 70 zwischen dem Kontakt 48 des Umschalters S₁ und der Feldwicklung 14 optional vorgesehen, der es ermöglicht, die Bremseinrichtung außer Funktion zu setzen, so daß das betreffende Elektrowerkzeug wahlweise als gebremstes oder ungebremstes Elektrowerkzeug betrieben werden kann.

Eine weitere Abwandlung der Schaltung des erfindungsgemäßen Reihenschlußmotors ist in Fig. 4 dargestellt und insgesamt mit der Ziffer 10'' bezeichnet. Auch hierbei ist wiederum nur der Bremsbetrieb dargestellt.

Die Schaltung entspricht weitgehend der zuvor anhand von Fig. 2 beschriebenen Schaltung, jedoch mit dem Unterschied, daß auf die Speichereinrichtung 28 vollständig verzichtet wurde, weshalb die Spannungsbegrenzungseinrichtung 24 nicht mehr als Diodenstrecke mit vier hintereinander in Durchlaßrichtung geschalteten Dioden ausgebildet ist, sondern aus zwei antiparallel zueinander geschalteten Diodenstrecken besteht.

Ferner ist der Schalter S'', der zum Umschalten zwischen Motorund Bremsbetrieb dient, als elektronischer Schalter mit zwei mechanisch betätigten Ein-Aus-Schaltern mit den Kontakten 44 bzw. 46 und den Kontakten 50 bzw. 52 ausgebildet, wobei zwei weitere Ein-Aus-Schalter mit den Anschlüssen 45 bzw. 48 und den Anschlüssen 51 bzw. 54 elektronisch geschaltet werden.

Werden die Kontakte 44, 46 geöffnet, so wird die Verbindung zwischen den Kontakten 45, 48 niederohmig; in entsprechender Weise wird die Verbindung zwischen den Kontakten 51, 54 niederohmig, wenn die Verbindung zwischen den Kontakten 52, 50 geöffnet wird.

Es versteht sich, daß statt dieser Ausführung auch weitere Abwandlungen des Schalters S'', beispielsweise unter Verwendung eines Relais möglich sind.

Die Funktionsweise der Bremsung ist jedoch wiederum dieselbe wie zuvor beschrieben.

In Abwandlung von der zuvor beschriebenen Ausführung wurde jedoch bei der Schaltung gemäß Fig. 4 auf die Speichereinrichtung 28 verzichtet, da festgestellt wurde, daß auch ohne eine solche Speichereinrichtung eine außerordentlich zuverlässige Bremsung erreicht wird. Somit wird das Ausfallrisiko, das naturgemäß mit einer Elektronik verbunden ist, vermieden.

## Patentansprüche

1. Reihenschlußmotor mit Kommutator, insbesondere Universalmotor für ein gebremstes Elektrowerkzeug, mit einer Ankerwicklung (12), mindestens einer Feldwicklung (14, 16), mindestens einer Wendepolwicklung (18, 20) mit einer Schalteinrichtung (S, S', , S'') zur Umschaltung zwischen Motorbetrieb und Bremsbetrieb, wobei im Motorbetrieb die mindestens eine Feldwicklung (14, 16) mit der Ankerwicklung (12) in einem von einer Versorgungsspannung (22) beaufschlagten Motorstromkreis (66) in Reihe geschaltet ist und durch die Schalteinrichtung (S, S', S'') die mindestens eine Wendepolwicklung (18, 20) überbrückt oder aus dem Motorstromkreis (66) abgetrennt ist, und wobei im Bremsbetrieb die mindestens eine Feldwicklung (14, 16) mit der Ankerwicklung (12) und mit mindestens einer Wendepolwicklung (18, 20) einen geschlossenen und von der Versorgungsspannung abgetrennten Bremsstromkreis (68) bildet.

2. Reihenschlußmotor nach Anspruch 1, **dadurch gekennzeichnet, daß** eine Einrichtung (34) zur Überbrückung der zumindest einen Wendepolwicklung (18, 20) im Bremsbetrieb nach Ablauf einer bestimmten Zeit oder in Abhängigkeit von einer für den Verlauf des Bremsvorgangs charakteristischen Größe, wie der Drehzahl, dem Bremsstrom oder der Bremsspannung, vorgesehen ist.

3. Reihenschlußmotor nach Anspruch 1, **dadurch gekennzeichnet, daß** die Schalteinrichtung (S') die mindestens eine Wendepolwicklung (18, 20) im Motorbetrieb überbrückt, im Bremsbetrieb zunächst nicht überbrückt und dann nach Ablauf einer bestimmten Zeit oder in Abhängigkeit von einer für den Verlauf des Bremsvorgangs charakteristischen Größe, wie der Drehzahl, dem Bremsstrom oder der Bremsspannung überbrückt.

4. Reihenschlußmotor nach Anspruch 1, 2 oder 3, **dadurch gekennzeichnet, daß** eine Speichereinrichtung (28) vorgesehen ist, die im Motorbetrieb aufgeladen wird und im Bremsbetrieb zur Einleitung der Selbsterrregung einen Strom durch die mindestens eine Feldwicklung (14, 16) erzeugt.

5. Reihenschlußmotor nach Anspruch 4, **dadurch gekennzeichnet, daß** die Speichereinrichtung (28) einen Kondensator (29) aufweist, der im Motorbetrieb durch den Spannungsabfall an der zumindest einen Feldwicklung (14, 16) oder an der Ankerwicklung oder durch die Versorgungsspannung (22) aufgeladen wird.

6. Reihenschlußmotor nach Anspruch 5, **dadurch gekennzeichnet, daß** parallel zu dem Kondensator (29) eine Diode (32) geschaltet ist, über die die zumindest eine Feldwicklung (14, 16) im Bremsbetrieb mit der zumindest einen Wendepolwicklung (18, 20) oder der Ankerwicklung (12) verbunden ist.

7. Reihenschlußmotor nach einem der vorhergehenden Ansprüche, **dadurch gekennzeichnet, daß** zur Begrenzung des Bremsstroms im Bremsbetrieb in einem zu der zumindest einen Feldwicklung (14, 16) parallelen Strompfad eine Spannungsbegrenzungseinrichtung (24) geschaltet ist.

8. Reihenschlußmotor nach Anspruch 7, **dadurch gekennzeichnet, daß** die Spannungsbegrenzungseinrichtung (24) von mehreren in Reihe geschalteten Dioden (26) gebildet ist, die in Durchlaßrichtung geschaltet sind.

9. Reihenschlußmotor nach Anspruch 7, **dadurch gekennzeichnet, daß** die Spannungsbegrenzungseinrichtung (24) zwei anti-parallel miteinander verbundenen Diodenstrecken gebildet ist.

10. Reihenschlußmotor nach einem der vorhergehenden Ansprüche, **dadurch gekennzeichnet, daß** die Ankerwicklung (12) über die Schalteinrichtung (S) im Motorbetrieb an einem Ende mit einem Pol (21) der Speisespannungsquelle (22) verbunden ist und am anderen Ende über die Schalteinrichtung (S) mit zwei in Reihe geschalteten Feldwicklungen (14, 16) verbunden ist, die über eine Steuerelekronik (36) mit dem zweiten Pol (23) der Speisespannungsquelle (22) verbunden sind.

11. Reihenschlußmotor nach Anspruch 10, **dadurch gekennzeichnet, daß** die Steuerelektronik (36) zumindest zur Anlaufstrombegrenzung oder zur Begrenzung der Leerlaufdrehzahl ausgebildet ist oder einen Anlauf des Reihenschlußmotors (10) beim Einstecken eines Verbindungssteckers für die Speisespannungsquelle (22) in einer Einschaltstellung der Schalteinrichtung (S) zum Motorbetrieb verhindert.

12. Reihenschlußmotor nach einem der vorhergehenden Ansprüche, **dadurch gekennzeichnet, daß** ein Schalter (70) zur Abschaltung der Bremsfunktion vorgesehen ist.

## Claims

1. A series motor comprising a commutator, in particular a universal motor for a retarded electric power tool comprising an armature winding (12), at least one field winding (14, 16), at least one commutating winding (18, 20), a switching means (S, S', S'') for switching between a motor mode and a retarding mode, wherein, when being in motor mode, the at least one field winding (14, 16) is connected in series with the armature winding (12) within a motor current loop (66) which is cut off from the power supply (22), and wherein the switching means (S, S', S'') bridges the at least one commutating winding (18, 20) or is cut off from the motor current loop (66), and wherein, when being in retarding mode, the at least one field winding (14, 16) together with the armature winding (12) and at least one commutating winding (18, 20) forms a closed retarding current loop (68) which is cut off from the power supply.

2. The series motor according to claim 1, **characterized in that** a device (34) is provided for bridging at least one commutating winding (18, 20) after a certain time has elapsed or depending on a parameter which is characteristic for the retarding mode, such as speed of rotation, retarding current or retarding voltage, when being in retarding mode.

3. The series motor according to claim 1, **characterized in that** the switching means (S') bridges the at least one commutating winding (18, 20), when being in motor mode, initially, when being in retarding mode, does not bridge and thereafter bridges, after a certain time has elapsed, or depending on a parameter characteristic for the course of the retarding mode, such as speed of rotation, retarding current or retarding voltage.

4. The series motor of any of claims 1, 2 or 3, **characterized in that** a storage device (28) is provided which is charged during motor mode and which generates a current through the at least one field winding (14, 16) for initiating self-excitation when being in retarding mode.

5. The series motor according to claim 4, **characterized in that** the storage device (28) comprises a capacitor (29) which is charged, when being in motor mode, by the voltage drop across the at least one field winding (14, 16) or across the armature winding or by means of the power supply (22).

6. The series motor according to claim 5, **characterized in that** in parallel to the capacitor (29) a diode (32) is connected by means of which the at least one field winding (14, 16) is connected with the at least one commutating winding (18, 20) or the armature winding (12), when being in retarding mode.

7. The series motor according to any of the preceding claims, **characterized in that** for limiting the retarding current, when being in retarding mode, a voltage limiting device (24) is connected in a current path in parallel to the at least one field winding (14, 16).

8. The series motor according to claim 7, **characterized in that** the voltage limiting device (24) is comprised of a series of diodes (26) connected in series and arranged in forward direction.

9. The series motor according to claim 7, **characterized in that** the voltage limiting device (24) is comprised of two diode paths connected in anti-parallel direction.

10. The series motor according to any of the preceding claims, **characterized in that** the armature winding (12) is connected at one end with a terminal (21) of the power source (22) via the switching device (S), when being in motor mode, and at its other end is connected via a switching device (S) with two field windings (14, 16) connected in series, which are connected to the second terminal (23) of the power source (22) by means of control electronics (36).

11. The series motor according to claim 10, **characterized in that** the control electronics (36) is designed at least for start-up current limitation or for limiting the idle speed of rotation or for impeding a start-up of the series motor (10) when inserting in motor mode a connecting plug to the power source (22) when being in a start-up switch mode of the switching means (S).

12. The series motor according to any of the preceding claims, **characterized in that** a switch (70) is provided for switching off the retarding function.

## Revendications

1. Moteur série avec commutateur, plus particulièrement un moteur universel pour un outil électrique freiné, avec une bobine d'induit (12), au moins une bobine de champ (14, 16), au moins une bobine de commutation (18, 20), avec un dispositif de couplage pour la commutation entre le fonctionnement moteur et le fonctionnement de freinage, moyennant quoi, en fonctionnement moteur, la bobine de champ est branchée en série avec la bobine d'induit (12) dans un circuit de moteur (66) alimenté par une tension d'alimentation (22) et l'au moins une bobine de commutation (18, 20) est court-circuitée ou séparée du circuit de moteur (66) par le dispositif de couplage (S, S', S") et moyennant quoi, en fonctionnement de freinage l'au moins une bobine de champ (14, 16) constitue, avec la bobine d'induit (12) et avec au moins une bobine de commutation (18, 20), un circuit de freinage (68) fermé et séparé de la tension d'alimentation.

2. Moteur série selon la revendication 1, **caractérisé en ce qu'**un dispositif (34) est prévu, qui permet de çourt-circuiter l'au moins une bobine de commutation (18, 20) en fonctionnement de freinage après l'écoulement d'un laps de temps déterminé ou en fonction d'une grandeur caractéristique du déroulement du processus de freinage, comme la vitesse de rotation, le courant de freinage ou la tension de freinage.

3. Moteur série selon la revendication 1, **caractérisé en ce que** le dispositif de couplage (S') court-circuite l'au moins une bobine de commutation (18, 20) en fonctionnement moteur, et, en fonctionnement de freinage ne la court-circuite d'abord pas puis la court-circuite après l'écoulement d'un laps de temps déterminé ou en fonction d'une grandeur caractéristique du déroulement du processus de freinage, comme la vitesse de rotation, le courant de freinage ou la tension de freinage.

4. Moteur série selon la revendication 1, 2 ou 3, **caractérisé en ce qu'**un dispositif d'accumulation (28) est prévu, qui est chargé en fonctionnement moteur et qui produit un courant en fonctionnement de freinage pour l'application d'une auto-excitation, à l'aide d'une bobine de champ (14, 16).

5. Moteur série selon la revendication 4, **caractérisé en ce que** le dispositif d'accumulation (28) comprend un condensateur (29) qui est chargé, dans le fonctionnement du moteur, à l'aide de la chute de tension au niveau de l'au moins une bobine de champ (14, 16) ou au niveau de la bobine d'induit ou à l'aide de la tension d'alimentation (22).

6. Moteur série selon la revendication 5, **caractérisé en ce qu'**une diode (32), grâce à laquelle l'au moins une bobine de champ (14, 16) est reliée, en fonctionnement de freinage, avec l'au moins une bobine de commutation (18, 20) ou la bobine d'induit (12), est branchée en parallèle avec le condensateur (29).

7. Moteur série selon l'une des revendications précédentes, **caractérisé en ce que**, en fonctionnement de freinage, pour limiter le courant de freinage, un dispositif de limitation de la tension (24) est branché dans un trajet du courant parallèle à l'au moins une bobine de champ (14, 16).

8. Moteur série selon la revendication 7, **caractérisé en ce que** le dispositif de limitation de la tension (24) est constitué de plusieurs diodes (26) branchées en série, qui sont branchées dans le sens direct.

9. Moteur série selon la revendication 7, **caractérisé en ce que** le dispositif de limitation de la tension (24) est constitué de deux séries de diodes reliées de manière anti-parallèle entre elles.

10. Moteur série selon l'une des revendications précédentes, **caractérisé en ce que** la bobine d'induit (12) est reliée, en fonctionnement moteur, par l'intermédiaire du dispositif de couplage (S), au niveau d'une extrémité, avec un pôle (21) de la source de tension d'alimentation (22) et à l'autre extrémité, par l'intermédiaire du dispositif de couplage (S), avec deux bobines de champ (14, 16) branchées en série, qui sont reliées au deuxième pôle (23) de la source de tension d'alimentation (22) par l'intermédiaire d'une électronique de commande (36).

11. Moteur série selon la revendication 10, **caractérisé en ce que** l'électronique de commande (36) est conçue au moins pour limiter le courant de démarrage ou pour limiter la vitesse de rotation de la marche à vide ou pour empêcher un démarrage du moteur série (10) lors de l'enfichage d'un connecteur enfichable pour la source de tension d'alimentation (22) dans une position de mise en marche du dispositif de couplage (S) pour le fonctionnement du moteur.

12. Moteur série selon l'une des revendications précédentes, **caractérisé en ce qu'**un interrupteur (70) est prévu pour l'arrêt de la fonction de freinage.
